Europäisches Patentamt

(19) European Patent Office

Office européen des brevets

(11) Publication number: **0 051 095**
**A1**

## (12) EUROPEAN PATENT APPLICATION

(21) Application number: **80303929.6**

(22) Date of filing: **05.11.80**

(51) Int. Cl.³: **B 60 N 1/06**
**B 60 N 1/00**

(43) Date of publication of application:
**12.05.82 Bulletin 82/19**

(84) Designated Contracting States:
**DE FR GB IT SE**

(71) Applicant: **UOP Inc.**
**10 UOP Plaza Algonquin & Mt. Prospect Roads**
**Des Plaines Illinois 60016(US)**

(72) Inventor: **Tengler Harvey Nick**
**16226 West Hansen Drive**
**New Berlin, Wisconsin(US)**

(74) Representative: **Newby, Raymond Laurence et al,**
**J.Y. & G.W. Johnson Furnival House 14/18 High Holborn**
**London WC1V 6DE(GB)**

(54) Angular vibration isolating mechanism for the back of a vehicle seat.

(57) An angular vibration isolating mechanism (10) is provided for a vehicle seat comprising a seat frame (16), a seat cushion (14) and a seat back (12), and this mechanism may be combined with a mechanism for adjusting the angle of the seat back. Eccentrically mounted cylindrically shaped cams (38) located at each side of the seat back (12) can be adjustably rotated around a shaft (32) within a guide channel (28) carried by the seat back (12). The cams (38) are positioned at a distance from a pivot axis (22) on the seat frame (16) around which the seat back (12) can tilt in order to adjust the angle of tilt. The flange (42) of each of the guide channels (28) is spaced from its respective cam (38) by a resilient means such as a thick pad (41) of elastomeric material which fills the space between the cam and the flange. The elastomeric pads (41) are compressed as the seat back (12) is forced forwardly against the seat occupant's back due to vehicle vibration, thus permitting the seat back to be driven rearwardly while the occupant's position in space remains relatively fixed.

Fig.2

- 1 -

## Angular vibration isolating mechanism for the back of a vehicle seat

### Background of the Invention

This invention relates to an angular vibration isolating mechanism for a vehicle seat.

In road vehicles, such as trucks, as well as off-the-road vehicles, such as tractors and scrapers, it is quite conventional to isolate vertical vibrations by mounting the vehicle seat or seats on a resilient suspension. lt is also common to isolate fore and aft vibrations by mounting the seat bottom on tracks which can slide fore and aft with the occupant against springs. Such fore and aft isolation systems can usually be locked out when desired since under severe vibration conditions they can hit their end stops and cause the operator's feet to move rapidly relative to the pedals in the vehicle and thus reduce, rather than increase, his ability to control the vehicle. Shock absorbers or other damping devices can reduce the aforementioned problem but they also reduce the ability to isolate vibrations. Also, when the vehicle is on either an up or down slope, the weight of the operator and seat can cause the seat to slide to one end of its isolation travel path.

The above-noted deficiencies of commercially available fore and aft vibration isolating mechanisms would seem to suggest that a system which would permit good pedal contact at all times while minimizing violent back and forth movement of the operator's torso and heart would be highly desirable.

In the specification of U.S. Patent 4,008,920, there is described a vehicle seat having means for adjusting the seat back angle. In this U.S. specification the seat back angle is adjusted by angularly rotating a circular cam plate which is eccentrically mounted for rotation about an axis which is spaced from and fixed relative to a pivot axis for the seat back. The cam plate is captured between a pair of guide rails in the form of a channel formed as part of the seat back frame. Since opposed peripheral edges of the circular cams engage, or at least substantially engage, both guide rails at once, rotation of the cams about their eccentric axes will cause the seat back to tilt about its pivot axis through a predetermined range of adjustment. The seat described in this U.S. specification does not, however, have any means for isolating fore and aft vibrations.

Summary of the Invention

It is among the objects of the present invention to provide an angular vibration isolating mechanism for a vehicle seat which will provide a substantial portion of the operator comfort advantages of available fore and aft isolation mechanisms as well as additional operator vibration isolation, at least in the critical heart region, during the periods of excess vibration when conventional mechanisms are ordinarily locked out of operation. Another object is to provide a considerable amount of fore and aft isolation in situations where there is insufficient space in the vehicle to mount a seat with a conventional fore and aft isolation unit. It is a further object to provide a seat back angular vibration isolating mechanism which is of simple construction and easy to install. A still further object is to provide a seat back angular vibration isolating mechanism which forms a portion of a seat back angle adjustment mechanism so that isolation is provided at any angle of seat back adjustment. These and other objects and advantages are attained by the vibration isolating mechanism of the present invention.

According to one aspect of the invention, an angular vibration isolating mechanism for the seat back of a vehicle seat comprising a seat frame, a seat bottom cushion carried by the seat frame, a seat back and pivot means for pivotally mounting the seat back for angular tilting movement relative to the seat frame, is characterized by resilient means engageable with the seat back for normally biasing the seat back to a predetermined angular position, said resilient means being deflectable by the forces developed between the seat back and the back of an occupant of the seat by fore and aft or pitching type vehicular vibrations to cause said seat back to tilt rearwardly when the vibration force is in a forward direction.

A conventional fore and aft isolator provides for about 5 cm of total travel or about 2.5 cm forward or backward movement from its centered position. Typically, such an isolator includes springs which are displaced 2.5 cm by a 13.61 kg (30 pounds) load. Since the isolator is usually under the seat, it sees not only the entire weight of the occupant but also the entire weight of the seat. Accordingly, it is quite sensitive to variations in operator weight and to changes in the angle of the road surface relative to horizontal. In use of the vibration isolating mechanism in accordance with the present invention, it can be arranged that the vast bulk of the seat weight and most of the weight of the operator do not exert a horizontal force component on the seat back. Thus, better control can be provided for occupants of differing weights.

It is preferable for operator comfort that the angle of the seat back be maintained at about the same angle during use regardless of the weight of the particular occupant. If the resilient means of the vibration isolating mechanism has a constant spring rate, it is obvious that the back angle, if not separately adjusted, would probably be too close to the vertical for a light weight occupant and too tilted to the rear for a heavier occupant. If a seat manufacturer does not wish to provide for back angle adjustment, the resilient means may be adjustably preloaded to assume a desired angle when occupied by occupants of differing weights or it may be especially shaped to provide a non-linear spring rate which would cause it to become stiffer and stiffer as it is deflected. In the latter case, the light occupant could enjoy the comforts of a much larger range of deflection than would be the case if a spring having a constant spring rate were used which would only fully deflect from the loading exerted by a heavy occupant. However, the vibration isolating mechanism of the present invention may be combined with a seat back adjusting mechanism.

Accordingly, in another aspect of the invention, a combined seat back angle adjusting and angular vibration isolating mechanism for a vehicle seat comprising a seat frame, a seat bottom cushion carried by the frame, a seat back and pivot means on the seat frame and the seat back for pivotally mounting the seat back for angular tilting movement relative to the seat frame, angular adjustment means mounted on the seat frame and the seat back at a location spaced from the pivot means selectively to adjust the normal angular position of the seat back relative to the seat frame in a predetermined adjustment range, is characterised in that said angular adjustment means includes a pair of rigid, cooperating contacting elements at each side of said seat back which limit forward movement of the seat back in any position of adjustment, said angular adjustment means further including resilient means for permitting a limited amount of angular rotation of said seat back in a rearward direction when said seat back is driven against the back of an occupant of the seat by fore and aft or pitching type vehicular vibrations.

Even with this combined mechanism in accordance with the invention, it is usually desirable to provide a certain amount of preload or compression of the resilient means when the seat is unoccuplied. This preloading has several advantages, including a reduction in the overall amount of travel which must be provided for the top of the seat back. Space is usually at a premium in a truck cab. To conserve it, rather than have the top of the seat back move 11.5 cm, for example, we prefer to preload the resilient means so that a 7.5 cm movement of the top of the seat back will absorb the same energy as a 11.5 cm movement of an unpreloaded seat back. Another advantage of preloading is that some occupants will not cause the seat back to deflect resiliently by the normal horizontal force component exerted by their back on the seat when they are seated comfortably. Thus, the seat back angle will not always need to be adjusted after an occupant sits down. Still another advantage of preloading is that the seat back will have no tendency to rattle when unoccupied.

In one embodiment of a combined seat back angle adjusting and angular vibration isolating mechanism, in accordance with the invention, an axially elongate, cylindrically surfaced cam is mounted at each side of the seat back for rotation about a support rod having an eccentrically positioned axis which is mounted for rotation in the seat frame. The cylindrical cams are positioned between the parallel, opposed flanges or side rails of a pair of generally vertical channel portions formed on or attached to the seat back. However, the diameter of the cams is substantially smaller than the distance between the flanges so as to form a space between the cam and one flange when the cam is contacting the other flange. The space is filled with a resilient means such as an elastomeric pad or metal spring which is affixed to the one flange. When elastomeric pads are employed, they are preferably made of a durable material such as Buna N rubber having a Shore A hardness of from about 35 to about 70 that can withstand the environment to which the seat is subjected. The resilient means preferably has a spring rate which is sufficient to provide substantial seat back deflection when subjected to loading by seat occupants of varying weights. The loading situation can be typically described as one wherein vehicle fore and aft or rotational pitching vibrations force the seat back forwardly against the occupant's back or rearwardly away from it. The major force of the forward impact of the seat back against the occupant is absorbed by the resilient means so as to cause the seat back to tilt rearwardly from its normal position, thus leaving the occupant at a relatively fixed position in space. As the vibration force switches direction to tend to drive the seat back rearwardly, the energy absorbed in the deflected resilient means will cause the seat back to be driven forwardly while remaining in contact with the occupant's back. The net result is that the occupant will experience very little fore and aft pitching movement,

- 6 -

thus greatly increasing his comfort since it is known that the comfort of the seat occupant is related to the magnitude of acceleration.  The greater the acceleration, the less time one can endure it and perform effectively.

Brief Description of the Drawing

The invention will now be further described, by way of example, with reference to the accompanying drawing, in which:

Figure 1 is a sectional view of one embodiment of a combined seat back angle adjusting and vibration isolating mechanism for a vehicle seat, the section being taken on line 1-1 of Figure 3,

Figure 2 is a fragmentary side view, on a reduced scale, of a vehicle seat incorporating the adjusting and vibration isolating mechanism of Figure 1, and

Figure 3 is a fragmentary rear perspective view of the vehicle seat of Figure 2.

Description of the Preferred Embodiment

There are certain similarities between the mechanism shown in the drawing and that shown in the aforesaid specification of U.S. Patent No. 4,008,920, and the disclosure of the latter is incorporated by reference herein.

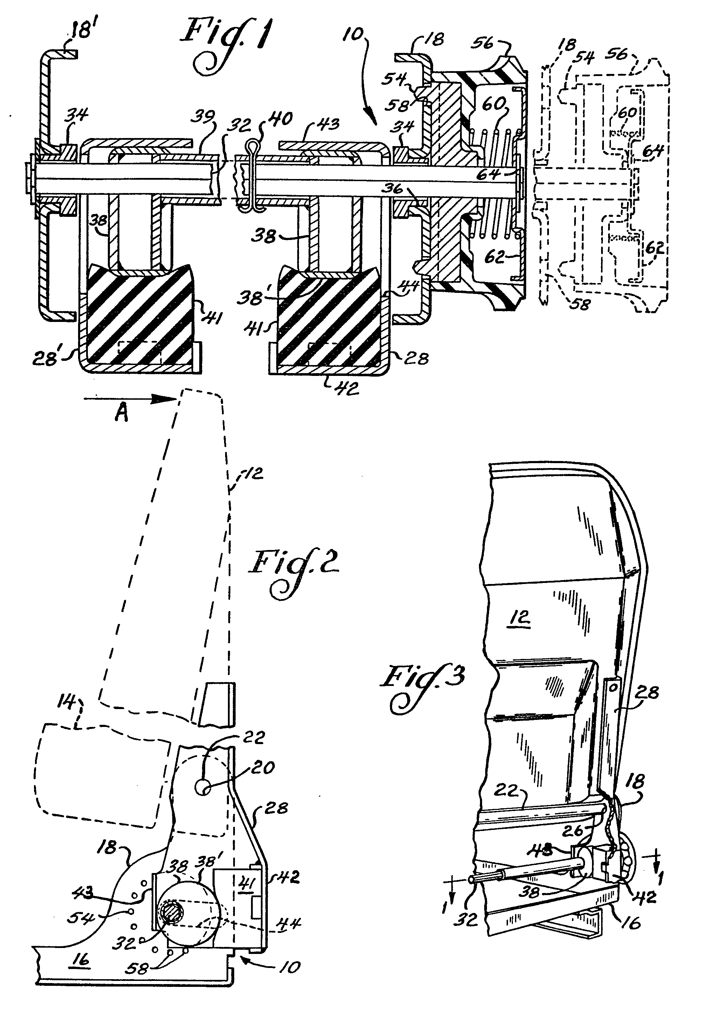

In  the drawing, Figure 1 is a detailed cross-sectional view of a combined seat back angle adjusting and vibration isolating mechanism 10 in accordance with the invention, while Figure 2 shows the relationship of the adjusting and vibration isolating mechanism 10 to a vehicle seat comprising a seat back 12, a seat cushion 14 and a seat frame 16.  The seat frame 16 includes a pair of upwardly extending seat back mounting portions 18, 18' which include a first aperture 20 in which a pivot rod 22 is mounted and retained by means such as E-rings (not shown). The pivot rod 22 also passes through a first aperture 26 (Figure 3) in each of a pair of channel members 28, 28' which are rigidly attached to the seat back 12. Referring to Figure 2, one can appreciate that the seat back 12 can be adjusted to various angles of tilt relative to the seat cushion 14 by pivoting it about the pivot rod 22. The degree of such pivotal movement which can take place, as distinguished from resilient isolation movement, is controlled by the adjusting and vibration isolating mechanism 10 which, as seen in Figure 1, includes a hexagonal rod 32 mounted in bearings 34 in second apertures 36 formed in the seat back mounting portions 18, 18' of the seat frame 16. A pair of cylindrical cam members 38 are welded eccentrically of their axes to a spacer tube 39 which is fastened to the hexagonal rod 32 by a pin 40 so that two diametrically opposed portions of the cylindrical cam members will be spaced from the hexagonal rod 32 by different amounts to provide eccentric peripheral cam surfaces 38'. First portions of the peripheral cam surfaces 38' of the cylindrical cam members 38 engage elastomeric pads 41 which are supported by rear wall portions 42 of the channel members 28, 28' while second diametrically opposed portions of the peripheral cam surfaces 38' simultaneously engage front wall portions 43 of the channel members 28, 28'. The parllel, opposed wall portions 42, 43 form a channel or guide track in the channel members 28, 28' which are rigidly attached to the seat back 12. Elongate slots 44 (Figure 2) formed in the pivotable channel members 28, 28' permit the seat back 12 to tilt forwardly and backwardly about the pivot rod 22 without interfering with the hexagonal rod 32. A rotation of the cylindrical cam member 38 through approximately 180° from the Figure 2 position will cause the seat back 12 to pivot progressively about the pivot rod 22 from its forwardmost to its rearwardmost fixed position of adjustment. The seat back 12 is positively retained in any one of about ten positions of adjustment throughout this range by means of a pair of locking pins 54 which are carried by a knob 56 and are adapted to engage in any pair of diametrically opposed apertures 58 in a circle of such apertures formed in the seat back mounting portion 18 of the seat frame 16.

In operation, the knob 56 is pulled axially outwardly by the seat occupant against the force of a spring 60 as shown in dotted lines in Figure 1. Once the locking pins 54 are clear of the seat back mounting portion 18 the knob 56 can be very easily rotated through an angle of up to 180° to cause a simultaneous rotation of the cam members 38 and a consequent pivoting of the channel members 28, 28' and tilting of the seat back 12. When a desired adjustment position has been reached, the operator merely releases the knob 56 and the spring 60 will cause the locking pins 54 to engage in one of the opposed pairs of apertures 58. The spring 60 is retained between the axially inner portion of the knob 56 and a cover plate 62, while the cover plate 62 is retained on the hexagonal rod 32 by means of an E-ring 64.

The elastomeric pads 41 are shown as being slightly compressed and are thus preloaded so that a predetermined amount of force must be applied by a seat occupant in the direction of the arrow A in Figure 2 before the seat back 12 will start to move rearwardly. Thus, all occupants of less than a certain weight would normally not deflect the seat back 12. As previously discussed, this situation reduces the amount of seat back movement that must be accommodated, reduces the need to vary the fixed seat back angle for different occupants, and prevents rattling when the seat is not occupied. The thickness of the elastomeric pads 41 and the distance they can be depressed are selected in accordance with the distance which the seat back 12 can be permitted to move and the respective distances between the top of the seat back 12 and the pivot rod 22 and between the pivot rod 22 and the portions of the peripheral cam surfaces 38' which engage the elastomeric pads 41. For example, if the top of the seat back 12 can move 7.5 cm and it is located 45 cm from the longitudinal axis of the pivot rod 22, the elastomeric pads 41 would be compressed 1.25 cm if their contact points with the peripheral cam surfaces 38' were 7.5 cm from the longitudinal axis of the pivot rod shaft 22.

Preferably, a stop member (not shown) is provided to limit the compression of the elastomeric pads 41. The hardness of the pads 41, their size, the area of contact of the cam surfaces 38' of the cylindrical cam members 38 with the elastomeric pads 41, the degree of preloading, and the distances of the elastomeric pads from the pivot rod 22 are all selected so that a predetermined amount of seat loading in the direction of the arrow A can be accommodated in the deflection range which is available. Obviously, when there is a large distance over which loading can be absorbed, the elastomeric pads 41 can be selected to have a lower spring rate than when space is more restricted. The lower spring rate would be more comfortable to the lighter occupant since he could deflect such a spring over a greater distance than he could deflect a stiffer spring.

An example of one satisfactory construction which provides good isolation utilizes elastomeric pads 41 of Buna N rubber having a Shore A hardness of 40 which are 3 cm thick, 3 cm wide and 4.75 cm high. The cylindrical cams 38 have a 3.75 cm outer diameter and a width of 1.875 cm in contact with the elastomeric pads 41. The elastomeric pads are compressed or preloaded by 15.42 kg (34 pounds) each, causing a 0.55 cm deflection. The maximum compression of the elastomeric pads before the aforementioned stop member (not shown) is contacted is 60.78 kg (134 pounds) each, providing a total deflection of 1.25 cm, or 45.36 kg (100 pounds) and 0.7 cm beyond the preload compression. If one considers the loading of the seat back 12 by the occupant to be at a distance of 30 cm from the longitudinal axis of the pivot rod 22 and if the elastomeric pads 41 are compressed at a point 7.5 cm from the axis of the pivot rod 22, the lengths of the upper and lower lever arms relative to the axis of the pivot rod 22 bear a relationship of 4:1. Thus, if each elastomeric pad 41 is fully compressed by a load of 60.78 kg (134 pounds), the pair of elastomeric pads will absorb 121.56 kg (268 pounds) which can be applied by applying a load of 30.39 kg (67 pounds) at a point 30 cm above the axis of the pivot rod 22. The elastomeric pads 41 can thus absorb 1.86 g of acceleration (g being the acceleration due to gravity) for a large or 95th percentile man weighing 100.24 kg (221 pounds) who would normally exert a static force of 16.33 kg (36 pounds) on the seat back 12.  An average or 50th percentile man weighing 75.3 kg (166 pounds) and exerting a 12.25 kg (27 pounds) static force could have 2.5 g of acceleration absorbed and a light or 5th percentile man weighing 47.62 kg (105 pounds) could have 3.9 g of acceleration absorbed.  The preceding figures are based on the assumption that about 76% of a person's weight is carried by the seat and 24% by the floor and that about 22% of a person's weight which is applied to the seat is applied to the seat back when he is seated comfortably.  In the present example, the light, or 5th percentile man, who weighs 47.62 kg (105 pounds) will not cause the seat back to deflect when he sits down since the 7.71 kg (17 pounds) he applies to the seat back at a point 30 cm above the axis of the pivot rod 22 will exactly equal the 15.42 kg preload applied to each of the elastomeric pads 41 at a point 7.5 cm below the axis of the pivot rod 22.  Thus, lighter occupants will not have to adjust the seat back angle from its normal position.

- 11 -

CLAIMS

1. An angular vibration isolating mechanism for the seat back of a vehicle seat comprising a seat frame (16), a seat bottom cushion (14) carried by the seat frame (16), a seat back (12) and pivot means (22) for pivotally mounting the seat back (12) for angular tilting movement relative to the seat frame (16), characterized by resilient means (41) engageable with the seat back (12) for normally biasing the seat back (12) to a predetermined angular position, said resilient means (41) being deflectable by the forces developed between the seat back (12) and the back of an occupant of the seat by fore and aft or pitching type vehicular vibrations to cause said seat back to tilt rearwardly when the vibration force is in a forward direction.

2. A vibration isolating mechanism according to claim 1, characterized in that said resilient means are spring members which are positioned adjacent side portions of the seat and between the seat frame (16) and the seat back (12).

3. A combined seat back angle adjusting and angular vibration isolating mechanism for a vehicle seat comprising a seat frame (16), a seat bottom cushion (14) carried by the seat frame (16), a seat back (12) and pivot means (22) on the seat frame (16) and the seat back (12) for pivotally mounting the seat back (12) for angular tilting movement relative to the seat frame (16), angular adjustment means mounted on the seat frame (16) and the seat back (12) at a location spaced from the pivot means (22) selectively to adjust the normal angular position of the seat back (12) relative to the seat frame (16) in a predetermined adjustment range, characterized in that said angular adjustment means includes a pair of rigid, cooperating contacting elements (38, 43) at each side of said seat back (12) which limit forward movement of the seat back (12) in any position of adjustment, said angular adjustment means further including resilient means (41) for permitting a limited amount of angular rotation of said seat back (12) in a rearward direction when said seat back (12) is driven against the back of an occupant of the seat by fore and aft or pitching type vehicular vibrations.

4. A mechanism according to claim 3, characterized in that said resilient means comprises a spring member which normally biases said pair of rigid cooperating contacting elements (38, 43) into contact with each other, one of said contacting elements (43) being integral with said seat back (12) and the other (38) being integral with said seat frame (16), said contacting elements (38, 43) being separable with one of them compressing the spring member to permit said limited degree of angular rotation of said seat back (12) in a rearward direction.

5. A mechanism according to claim 4, characterized in that said one contacting element (43) comprises the forward wall portion of a channel-shaped member (28, 28') having a pair of opposed, parallel wall portions (42, 43), the spring member being mounted between the rearward wall portion (42) and the other (38) of said contacting elements.

6. A mechanism according to claim 5, characterized in that said other (38) of said contacting elements is a cylindrically shaped member which is eccentrically mounted on an axis (32) which is rotationally adjustable to selectively adjust the normal angular position of said seat back (12) relative to said seat frame (16) in said predetermined adjustment range.

7. A mechanism according to any of claims 2 to 6, characterized in that said spring members are elastomeric pads (41).

8. A mechanism according to claim 7, characterized in that said elastomeric pads (41) have a Shore A hardness of from 35 to 70, preferably about 40.

9. A mechanism according to claim 7 or 8, characterized in that said elastomeric pads (41) are slightly compressed or preloaded when said seat is not occupied.

10. A mechanism according to claim 9, characterized in that said elastomeric pads (41) are sufficiently preloaded that the normal static loads exerted into the seat back (12) when the seat is comfortably occupied by a person weighing about 47.6 kg (105 pounds) or less will not be sufficient to overcome the preloading and to deflect the seat back (12).

Fig.1

Fig.2

Fig.3

European Patent Office

**EUROPEAN SEARCH REPORT**

Application number

EP 80 30 3929

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 1 663 898 (F.C.BITZEN-BURGER) <br><br> * page 1, left-hand column, lines 1-33; page 1, right-hand column, lines 79-108; page 2, left-hand column, lines 1-56; right hand column, lines 80-130; page 3, left-hand column, lines 1-12; figures 1,2,4,5 * <br><br> -- | 1,3 | B 60 N 1/06 <br> B 60 N 1/00 |
| X | IT - A - 483 083 (S.A.P.) <br><br> * left-hand column, lines 1-6; 21-23; figures 1,4 * <br><br> -- | 1 | |
| | GB - A - 233 519 (THE SINGER MANUFACTURING CO.) <br><br> * the whole document; figures 1,3 * <br><br> -- | 1,2 | TECHNICAL FIELDS SEARCHED (Int. Cl.³) <br><br> B 60 N |
| | US - A - 3 046 051 (W.C.SCHMIDT) <br><br> * the whole document, figures 1,4,5 * <br><br> -- | 1,3,9 | |
| | GB - A - 1 165 135 (THE TAN-SAD CHAIR CO.) <br><br> * the whole document,figures 1,2,3 * <br><br> -- | 1,3,4,7 | CATEGORY OF CITED DOCUMENTS <br><br> X: particularly relevant <br> A: technological background <br> O: non-written disclosure <br> P: intermediate document |
| | FR - A - 1 495 505 (LAURENT ET BLOCH) <br><br> * the whole document, figures 1,3 * <br><br> -- <br> ./. | 1,5 | T: theory or principle underlying the invention <br> E: conflicting application <br> D: document cited in the application <br> L: citation for other reasons |

X The present search report has been drawn up for all claims

&: member of the same patent family, corresponding document

| Place of search | Date of completion of the search | Examiner |
|---|---|---|
| THE HAGUE | 24-06-1981 | CAPRARI |

EPO Form 1503.1   06.78

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 441 313 (B.G.PERSSON)  * the whole document; figures 1,3 * | 1,6 | |
| | US - A - 1 744 258 (F.C.BITZENBURGER)  * page 1, left-hand column, lines 17-22; page 2, left-hand column, lines 29-33; figure 1 * | 1,9 | |
| D | US - A - 4 008 920 (UOP INC.)  * the whole document *  ---------- | | TECHNICAL FIELDS SEARCHED (Int. Cl.³) |

EPO Form 1503.2  06.78